# EUROPÄISCHE PATENTSCHRIFT

(11) **EP 1 184 235 B1**
(45) Veröffentlichungstag und Bekanntmachung des Hinweises auf die Patenterteilung: **29.03.2006**
(21) Anmeldenummer: 01250271.2
(22) Anmeldetag: 20.07.2001
(51) Int. Cl.: B60R 21/213

(54) **Airbag-Anordnung für ein Kraftfahrzeug**
Air bag arrangement for a motor vehicle
Agencement de sac de sécurité gonflable pour véhiclue automobile

(30) Priorität: 01.09.2000 DE 10044049; 07.11.2000 DE 10056081
(43) Veröffentlichungstag der Anmeldung: 06.03.2002
(73) Patentinhaber: Takata-Petri AG, 63743 Aschaffenburg (DE)
(72) Erfinder: Sauer, Frank, 63843 Niedernberg (DE); Zerbe, Manfred, 63739 Aschaffenburg (DE); Gottschalk, Markus, 30974 Wennigsen (DE)
(74) Vertreter: Baumgärtel, Gunnar

(56) Entgegenhaltungen:
- EP-A- 0 814 001
- WO-A-96/26087
- DE-A- 19 816 061
- GB-A- 2 327 066

## Beschreibung

Die Erfindung betrifft eine Airbag-Anordnung für ein Kraftfahrzeug nach dem Oberbegriff des Anspruchs 1.

Eine derartige Airbag-Anordnung umfaßt mindestens einen aufblasbaren Bereich, der mittels eines Gasgenerators aufblasbar ist und im aufgeblasenen Zustand in dem Kraftfahrzeug einen seitlichen Vorhang zum Schutz des Kopfes und der Schulter eines Insassen bildet, wobei die Airbag-Anordnung im aufgeblasenen Zustand zwischen zwei in Fahrzeug längsrichtung voneinander beabstandeten Punkten der Fahrzeugkarosserie eingespannt ist. Ferner weist die Airbag-Anordnung in mindestens einem Abschnitt einen Trennungsbereich auf, der von einem Straffelement überbrückt wird, das gemeinsam mit dem aufblasbaren Bereich der Airbag-Anordnung aufblasbar ist, so daß sich der mit dem Trennungsbereich versehene Abschnitt verformt und hierdurch die effektive Länge dieses Abschnittes in Fahrzeuglängsrichtung verkürzt wird.

Solche Airbag-Anordnungen werden auch als "Vorhänge" bezeichnet, die in einem Crash-Fall vor den seitlichen Fensterscheiben eines Kraftfahrzeugs ausgebracht werden, um einen Aufprall eines Fahrzeuginsassen gegen die Fensterscheibe bzw. gegen seitliche Karosserieteile des Kraftfahrzeugs oder gar ein Herausschleudern des Insassen durch eine Fensterscheibe zu verhindern. Hierfür ist von Bedeutung, das die Airbag-Anordnung im Bereich ihrer unteren Kante beim Aufblasen straff gespannt wird. Denn nur bei einer hinreichenden Spannung der unteren Kante der Airbag-Anordnung ist gewährleistet, daß sie einen Fahrzeuginsassen, insbesondere bei einem "roll-over", gegen ein Herausschleudern durch die Fenster schützen kann.

Aus der WO 96/26087 und der EP 0 814 001 A1 ist es jeweils bekannt, die Airbag-Anordnung in ihren aufblasbaren Bereichen mit Einschnürungen zu versehen, die sich bis zur Unterkante der aufblasbaren Bereiche erstrecken und die beim Aufblasen dieser Bereiche eine Verkürzung der effektiven Länge der Unterkante bewirken, wodurch die Airbag-Anordnung im Bereich ihrer Unterkante gestrafft wird.

In der gattungsbildenden GB 2 327 066 B ist eine Airbag-Anordnung beschrieben, die zusätzlich zu den vorstehend erwähnten, sich bis zur Unterkante der aufblasbaren Bereiche des Airbags erstreckenden Einschnürungen zwei aufblasbare Kammern aufweist, die sich im wesentlichen parallel zueinander erstrecken, wenn der Airbag im unaufgeblasenen Zustand im Dachkantenbereich eines Kraftfahrzeugs verstaut ist, und die eine im wesentlichen X-förmige Gestalt annehmen, wenn die aufblasbaren Bereiche des Airbags zum Schutz eines Kraftfahrzeuginsassen mit Gas befüllt werden. Hierdurch verkürzt sich die effektive Länge dieser aufblasbaren Kammern in Fahrzeuglängsrichtung und der Airbag wird zwischen zwei in Fahrzeuglängsrichtung voneinander beabstandeten Befestigungspunkten gestrafft.

Aus der DE 198 16 061 A1 ist eine Airbag-Anordnung für ein Kraftfahrzeug bekannt, die einen Airbag umfaßt, der dazu eingerichtet ist, in einem Crash-Fall aufgeblasen zu werden, um einen seitlichen Vorhang zu bilden, wobei der Airbag einen Befestigungsstreifen zwischen dem Vorhang und einem Verankerungspunkt an der Karosserie besitzt und wobei der Befestigungsstreifen aufblasbare Mittel enthält, um die Effektivlänge des Befestigungsstreifen beim Aufblasen zu verkürzen und hierdurch den Airbag zu straffen.

Der Erfindung liegt die Aufgabe zugrunde, ein Airbag-Anordnung der eingangs genannten Art zu schaffen, die mit einfachen Mitteln eine hinreichende Straffung der Anordnung beim Aufblasen ermöglicht.

Diese Aufgabe wird erfindungsgemäß durch die Schaffung einer Airbag-Anordnung mit den Merkmalen des Patentanspruchs 1 gelöst.

Danach weist das unaufgeblasene Straffelement zwischen den Befestigungsstellen beidseits des Trennungsbereiches eine Länge auf, die größer ist als der Abstand der Befestigungsstellen der locker ausgebreiteten, unaufgeblasenen Airbag-Anordnung und durch Aufblasen des Straffelementes wird der Abstand seiner Befestigungsstellen beidseits des Trennungsbereiches vergrößert, was zu der angestrebten Zunahme der Breite des Trennungsbereiches (das heißt, dessen Ausdehnung quer zu seiner Erstreckungsrichtung) führt.

Die Erfindung beruht auf der Erkenntnis, daß sich die Wirkung eines aufblasbaren Straffelementes im Hinblick auf die Straffung der Airbag-Anordnung deutlich verbessern läßt, wenn dem Straffelement ein Trennungsbereich in einem Abschnitt der Airbag-Anordnung zugeordnet ist, dessen Breite, d. h. Ausdehnung quer zur Fahrzeuglängsrichtung, durch Aufblasen des Straffelementes zunimmt. In der Umgebung dieses Trennungsbereiches ist beim Aufblasen des Straffelementes eine besonders starke Verformung des genannten Abschnittes der Airbag-Anordnung möglich, was eine entsprechend starke Verkürzung der effektiven Länge dieses Abschnittes und damit eine entsprechende Straffung der Airbag-Anordnung nach sich zieht.

Unter einem Trennungsbereich wird hier eine beliebige Trennung verstanden, die einen Abschnitt der Airbag-Anordnung in zwei Teilabschnitte unterteilt, so daß die beiden Teilabschnitte relativ zueinander bewegt werden können, (insbesondere voneinander weg bewegt werden können), und zwar zerstörungsfrei in einem größeren Ausmaß und mit einem geringeren Kraftaufwand als eine entsprechender Abschnitt der Airbag-Anordnung ohne eine solche Trennung. Der Trennungsbereich dient also dazu, eine Verformung des genannten Abschnittes der Airbag-Anordnung beim Aufblasen des Straffelementes zu ermöglichen bzw. zu erleichtern.

Der Trennungsbereich kann insbesondere durch einen beliebigen Freiraum zwischen zwei Teilabschnitten der Airbag-Anordnung gebildet werden, z.B. in Form eines Schlitzes oder eines Spaltes (wenn die beiden Teilabschnitte überlappen), oder durch einen nicht aufblasbaren Bereich der Airbag-Anordnung. Im letztgenannten Fall muß der nicht aufblasbare Bereich entsprechend gestaltet sein, um eine Verformung dieses Bereiches beim Aufblasen des Straffelementes zu ermöglichen. Hierzu kann der Trennungsbereich einen Schwächungsbereich aufweisen, z.B. in Form einer Perforation, der beim Aufblasen des Straffelementes reißt, oder mindestens eine Falte, die sich vorzugsweise quer zu dem Straffelement erstreckt und die beim Aufblasen des Straffelementes durch Straffung des Trennungsbereiches aufgehoben wird.

Der Trennungsbereich und das zugeordnete Straffelement sind derart anzuordnen, daß insbesondere eine Straffung der Airbag-Anordnung im Bereich ihrer Unterkante erfolgt. Eine Straffung der Oberkante der Airbag-Anordnung ist demgegenüber in der Regel von geringerer Bedeutung, da die Airbag-Anordnung entlang ihrer Oberkante an der Fahrzeugkarosserie, insbesondere am Dachkantenbereich der Fahrzeugkarosserie, festgelegt ist.

Der Trennungsbereich kann grundsätzlich an einer beliebigen Stelle der Airbag-Anordnung vorgesehen sein. Es ist nicht erforderlich, daß der Trennungsbereich am Airbag selbst ausgebildet ist; er kann z.B. auch zwischen zwei Bändern verlaufen, mittels derer der Airbag an der Fahrzeugkarosserie befestigt ist. Dies bedeutet insbesondere auch, daß der Trennungsbereich nicht in einen einteiligen Abschnitt der Airbag-Anordnung integriert sein muß. Der Trennungsbereich kann vielmehr auch zwischen zwei unterschiedlichen Teilen der Anordnung, wie z.B. zwischen zwei der vorstehend erwähnten Bänder, vorgesehen sein.

Der Trennungsbereich erstreckt sich vorzugsweise derart in einem Abschnitt der Airbag-Anordnung, daß seine Erstrekkungsrichtung zumindest eine Komponente in Fahrzeuglängsrichtung aufweist, und das Straffelement überbrückt den Trennungsbereich quer zu seiner Erstreckungsrichtung bzwverläuft quer zur Fahrzeuglängsrichtung.

Das Straffelement kann in einfacher Weise als separates Element an dem mit dem Trennungsbereich versehenen Abschnitt der Airbag-Anordnung befestigt werden, wobei das Straffelement im unaufgeblasenen Zustand lose über dem Trennungsbereich liegt und beim Aufblasen gestrafft wird, wodurch die Breite des Trennungsbereiches (das heißt, dessen Ausdehnung quer zu seiner Erstreckungsrichtung) sich verändert, insbesondere zunimmt. Aufgrund der beim Aufblasen des Straffelementes bewirkten Änderung der Breite des Trennungsbereiches wird zugleich auch eine Verformung der Airbag-Anordnung im Bereich des mit dem Trennungsbereich versehenen Abschnittes hervorgerufen. Hierbei wölbt sich die untere Kante des mit dem Trennungsbereich versehenen Abschnittes und die effektive Länge dieses Abschnittes in Fahrzeuglängsrichtung wird verkürzt.

Die Befestigung des Straffelementes beidseits des Trennungsbereiches erfolgt vorzugsweise durch Nähte.

Es ist vorteilhaft, wenn der Trennungsbereich in einem nicht aufblasbaren Abschnitt der Airbag-Anordnung vorgesehen ist. So kann der Trennungsbereich in einem Befestigungsabschnitt der Airbag-Anordnung vorgesehen sein, der sich von einem aufblasbaren Bereich der Airbag-Anordnung zu einem Teil der Kraftfahrzeugkarosserie erstreckt und dort befestigt ist. Andererseits kann der Trennungsbereich auch an einem Abschnitt der Airbag-Anordnung vorgesehen sein, die sich zwischen zwei aufblasbaren Bereichen der Airbag-Anordnung erstreckt. Durch diese Anordnung des Trennungsbereiches außerhalb der aufblasbaren Bereiche der Airbag-Anordnung kann die Gestaltung letzterer frei im Hinblick auf die Gewährleistung des bestmöglichen Aufprallschutzes optimiert werden, ohne das bei Gestaltung der aufblasbaren Bereiche die Integration von Mitteln zur Straffung der Airbag-Anordnung berücksichtigt werden müßte.

Der Trennungsbereich verläuft quer zur Erstreckungsebene des zugeordneten Abschnittes der Airbag-Anordnung vorzugsweise durchgehend, so daß dieser Abschnitt durch den Trennungsbereich in zwei Teilabschnitte unterteilt wird.

Das Straffelement kann in einfacher Weise mit Gasen aus demselben Gasgenerator aufgeblasen werden, der auch zum Aufblasen des mindestens einen aufblasbaren Bereiches der Airbag-Anordnung dient. Hierbei kann einerseits eine direkte Verbindung zwischen dem Straffelement und dem Gasgenerator bestehen, z.B. in dem die Gase unmittelbar von einer zum Aufblasen der Airbag-Anordnung dienenden Gaslanze dem Straffelement zugeführt werden, oder es werden Gase aus einem aufblasbaren Bereich der Airbag-Anordnung zu dem Straffelement weitergeleitet. Alternativ kann natürlich auch eine separate Druckerzeugungsvorrichtung zum Aufblasen des Straffelementes vorgesehen sein.

Das Straffelement besteht vorzugsweise aus einem für die verwendeten Gase undurchlässigen Material, damit sich der aufgeblasene Zustand des Straffelementes und damit der gestraffte Zustand der Airbag-Anordnung insgesamt möglichst lange aufrecht erhalten lassen.

Hierzu können weiter Mittel vorgesehen sein (z.B. in Form einer im Einströmbereich des Straffelementes angeordneten Membran), die nach dem Aufblasen des Straffelementes das Ausströmen der Gase aus dem Straffelement verhindern.

Die erfindungsgemäße Airbag-Anordnung kann in einfacher Weise aus zwei miteinander vernähten Lagen, insbesondere Gewebelagen bestehen, wobei durch den Verlauf der Nähte die aufblasbaren Bereiche und die nicht aufblasbaren Abschnitte der Airbag-Anordnung festgelegt werden. Eine solche Airbag-Anordnung kann sich entlang der gesamten seitlichen Fahrzeugkarosserie von der A-Säule bis zur C-säule erstrekken, wobei eine Fixierung, der Airbag-Anordnung an mindestens einen Punkt im Bereich der A-Säule und an mindestens einen Punkt der C-Säule erfolgt. Die Airbag-Anordnung kann jedoch auch nur zur Abdeckung eines Teiles der seitlichen Fahrzeugkarosserie, z.B. des Abschnittes A-Säule und B-Säule oder des Abschnittes zwischen B-Säule und C-Säule vorgesehen sein.

Weitere Merkmale und Vorteile der Erfindung werden bei der nachfolgenden Beschreibung von Ausführungsbeispielen anhand der Figuren deutlich werden.

Es zeigen:
- Figur la -: eine Seitenansicht einer Airbag-Anordnung, die sich zwischen der A-Säule und der C-Säule eines Kraftfahrzeuges erstreckt;
- Figur 1b -: einen Querschnitt durch die Airbag-Anordnung aus Figur 1a im Bereich eines von einem losen Straffelement überbrückten Trennungsbereiches;
- Figur 2a -: die Airbag-Anordnung aus Figur 1a nach dem Aufblasen in einem Crash-Fall;
- Figur 2b -: einen Querschnitt durch die Airbag-Anordnung aus Figur 2a im Bereich des von einem aufgeblasenen Straffelement überbrückten Trennungsbereiches;
- Figuren 3a-3c -: verschiedene Abwandlungen des Straffelementes aus den Figuren 1 und 2;
- Figur 4a -: eine Seitenansicht eines weiteren Ausführungsbeispieles einer Airbag-Anordnung, die sich zwischen der A-Säule und der C-Säule eines Kraftfahrzeugs erstreckt;
- Figur 4b -: einen Querschnitt durch die Airbag-Anordnung aus Figur 4a im Bereich eines von einem losen Straffelement überbrückten Trennungsbereiches;
- Figur 5a -: die Airbag-Anordnung aus Figur 4a nach dem Aufblasen in einem Crash-Fall;
- Figur 5b -: einen Querschnitt durch die Airbag-Anordnung aus Figur 5a im Bereich des von einem aufgeblasenen Straffelement überbrückten Trennungsbereiches;
- Figur 6a -: eine Seitenansicht eines dritten Ausführungsbeispieles einer Airbag-Anordnung, die sich zwischen der A-Säule und der C-Säule eines Kraftfahrzeuges erstreckt;
- Figur 6b -: die Airbag-Anordnung aus Figur 6a nach dem Aufblasen in einem Crash-Fall.

Figur 1a zeigt in einer Ansicht einen flach ausgebreiteten Airbag 100, der im seitlichen Dachkantenbereich eines Kraftfahrzeugs verstaubar ist und zur Bildung eines seitlichen Vorhanges in einem Crash-Fall vorgesehen ist. Der Airbag 100 bildet einen wesentlichen Bestandteil einer Airbag-Anordnung, die neben dem Airbag 100 noch weitere Elemente wie z.B. einen Gasgenerator, eine Gaslanze und dergl. umfaßt.

Der Airbag 100 wird gebildet durch zwei Gewebelagen 101, 102, von denen die eine Gewebelage 101 der seitlichen Fahrzeugkarosserie und die Gewebelage 102 dem Fahrzeuginnenraum zugewandt ist, wenn der Airbag in einem Kraftfahrzeug als Vorhang ausgebracht ist. Die beiden Gewebelagen 101, 102 sind über eine Naht 110 miteinander vernäht, und zwar derart, daß in dem Airbag 100 zwei aufblasbare Bereiche 2, 4 gebildet werden, sowie nicht aufblasbare vordere und hintere Befestigungsabschnitte 1,5 und ein die beiden aufblasbaren Bereiche 2, 4 miteinander verbindender mittlerer Abschnitt 3.

Die obere Kante 104 des Airbags 100 ist in ihrer Gestalt an den Verlauf des Dachkantenbereichs des Fahrzeugs angepaßt, in dem der Airbag 100 angeordnet werden soll. Die untere Kante 103 des Airbags verläuft dagegen im wesentlichen geradlinig zwischen dem vorderen Ende des vorderen Befestigungsabschnittes 1 und dem hinteren Ende des hinteren Befestigungsabschnittes 5 des Airbags 100. An dem vorderen und hinteren Befestigungsabschnitt 1, 5 ist jeweils eine Befestigungsstelle 10 bzw. 50 vorgesehen, die zur Befestigung des vorderen Befestigungsabschnittes 1 im Bereich der A-Säule und des hinteren Befestigungsabschnittes 5 im Bereich der B-Säule des Fahrzeugs dienen.

Die beiden aufblasbaren Bereiche 2, 4 der Airbag-Anordnung sind über einen Kanal 24 miteinander verbunden. Durch diesen Kanal 24 hindurch kann in bekannter Weise eine Gaslanze geführt werden, die durch eine Öffnung 42 in den Airbag 100 einführbar ist und sich entlang des gesamten Dachkantenbereiches der beiden aufblasbaren Bereiche 2, 4 erstreckt. Durch diese Gaslanze kann bei Aktivierung des Gasgenerators in einem Crash-Fall das zum Aufblasen des Airbags vorgesehene Gas aus einem Gasgenerator in die beiden aufblasbaren Bereiche 2, 4 strömen.

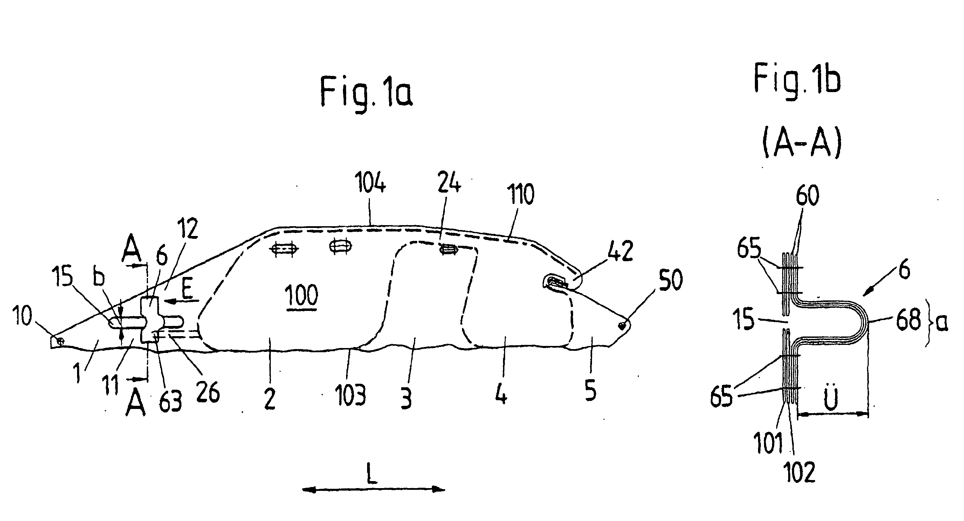

Anhand Figur 1a unter zusätzlicher Bezugnahme auf den Querschnitt in Figur 1b wird weiterhin deutlich, daß sich in dem vorderen Befestigungsabschnitt 1 des Airbags 100 ein Trennungsbereich in Form eines Schlitzes in einer Richtung E parallel zur Fahrzeuglängsrichtung L erstreckt. Dieser Schlitz 15 verläuft quer zur Erstreckungsebene des Befestigungsabschnittes 1 durchgängig, das heißt, er durchschneidet die beiden Gewebelagen 101, 102 in dem vorderen Befestigungsabschnitt 1 vollständig und teilt diesen dadurch in einen unteren Teilabschnitt 11 und einen oberen Teilabschnitt 12.

Der Schlitz 15 mit einer gegebenen Breite b (Ausdehnung quer zur Erstreckungsrichtung E des Trennungsbereiches 15) wird von einem Straffelement 6 überbrückt, das aus einem Gewebezuschnitt 60 besteht und beidseits des Schlitzes 15 mit den Gewebelagen 101, 102 des Airbags 100 an Befestigungsstellen 65 (Nähte) vernäht ist. Das Straffelement 6 liegt in dem in den Figuren 1a und 1b dargestellten Zustand der Airbag-Anordnung, in dem diese flach ausgebreitet ist, lose auf dem Schlitz 15 auf und bildet hierbei eine Falte 68.

Die Länge 2*Ü des überstehenden Materials des Straffelementes 6, das lose über dem Schlitz 15 verläuft, ist dabei frei wählbar. Durch die Festlegung dieser Länge Ü ist unter anderem die Straffwirkung des Straffelementes 6 einstellbar, wie nachfolgend noch gezeigt werden wird.

Anders ausgedrückt ist in dem in Figur 1a und 1b gezeigten, ausgebreiteten Zustand des leeren Gassackes der Abstand (a) zwischen den Befestigungsstellen 65 beidseits des Schlitzes 15 erheblich kleiner als die Länge (a+2*Ü) des Straffelementes 6 zwischen den beiden Befestigungsstellen 65.

In Figur 1a ist ferner angedeutet, daß sich zwischen dem vorderen aufblasbaren Bereich 2 des Airbags 100 und dem Straffelement 6 eine Gaszuleitung 26 erstreckt, durch die hindurch dem aufblasbaren Bereich 2 zugeführtes Gas weiter in das Straffelement 6 geleitet werden kann.

Die in den Figuren 1a und 1b dargestellte Airbag-Anordnung wird - zu einem länglichen Paket zusammengef altet - im Dachkantenbereich eines Fahrzeuges verstaut. In einem Crash-Fall wird diese Airbag-Anordnung sensorgesteuert als seitlicher Vorhang vor den Seitenscheiben und anderen seitlichen Karosserieteilen des Fahrzeugs ausgebracht und gleichzeitig aufgeblasen. Die beiden aufblasbaren Bereiche 2, 4 des Airbags 100 bilden dann einen seitlichen Aufprallschutz für Fahrzeuginsassen, wobei der vordere aufblasbare Bereich 2 einem auf einem Vordersitz befindlichen Fahrzeuginsassen und der hintere aufblasbare Bereich 4 einem auf einem Rücksitz befindlichem Insassen zugeordnet ist. Der vordere aufblasbare Bereich 2 erstreckt sich also insbesondere vor einer vorderen Seitenscheibe und der hintere aufblasbare Bereich 4 vor einer hinteren Seitenscheibe des Fahrzeugs. Darüber hinaus sind mit den aufblasbaren Bereichen 2, 4 auch seitliche Karosserieteile zum Innenraum hin abdeckbar, um den Aufprall eines Insassen z. B. auf die B-Säule zu verhindern.

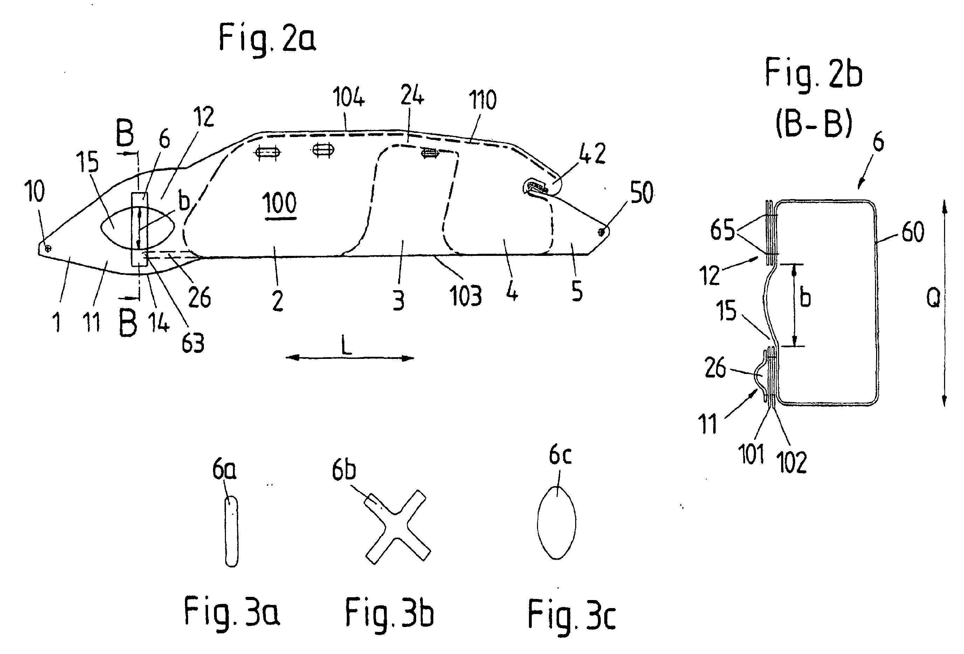

Beim Aufblasen der aufblasbaren Bereiche 2, 4 des Airbags 100 wird aus dem vorderen aufblasbaren Bereich 2 Gas über die Gaszuleitung 26 zu dem Straffelement 6 weitergeleitet. Wie anhand Figur 2b erkennbar ist, wird die Gaszuleitung 26 dabei durch einen mit den Gewebelagen 101, 102 der Airbags 100 vernähten Gewebeabschnitt gebildet. Hierdurch wird beim Aufblasen der beiden Bereiche 2, 4 des Airbags 100 zugleich auch das Straffelement 6 durch die aus dem Gasgenerator der Airbag-Anordnung strömenden Gase aufgeblasen.

Beim Aufblasen strafft sich das Straffelement 6 und seine Länge Q quer zur Erstreckungsrichtung E des Schlitzes 15 nimmt zu. Hierdurch vergrößert sich die Breite b des Schlitzes 15, der von dem Straffelement 6 überbrückt wird. (Der Abstand der Befestigungsstellen 65 beidseits des Schlitzes 15 entspricht dann der Länge des aufgeblasenen Straffelementes 6 zwischen den Befestigungsstellen 65.) Die Änderung der Breite b des Schlitzes 15 hat wiederum eine Verformung des Befestigungsabschnittes 1 im Bereich des Schlitzes 15 zur Folge; insbesondere verformen sich die beidseits des Schlitzes 15 gebildeten Teilabschnitte 11, 12 des Befestigungsabschnittes 1. Dies führt zu einer Wölbung des Befestigungsabschnittes 1 im Bereich der Unterkante 103 des Airbags 100, und durch die Wölbung 14 im Bereich der Unterkante des Befestigungsabschnittes 10 wird dessen effektive Länge in Fahrzeuglängsrichtung L verkürzt. Folge hiervon ist die Straffung des Airbags 100 entlang seiner Unterkante 103.

Durch eine hinter dem Einströmbereich 63 des Straffelementes 6 angeordnete Membran mit Rückschlagfunktion kann dabei sichergestellt werden, daß die beim Aufblasen durch den Einströmbereich 63 in das Straffelement 6 eingeströmten Gase nicht wieder herausströmen, wenn der Airbag 100 erschlafft. Hierdurch kann die Spannung der Unterkante 103 des Airbags 100 für entsprechend lange Zeit aufrecht erhalten werden.

Es ist erkennbar, daß die zunahme der Breite b des Schlitzes 15 beim Aufblasen des Airbags 100 um so stärker ist, je größer die Länge 2*Ü des im nicht aufgeblasenen Zustand lose über dem Trennungsbereich liegenden, in eine Falte 68 gelegten Abschnittes des Straffelementes 6 ist. Denn diese Länge 2*Ü bestimmt zugleich die Länge des Straffelementes 6 entlang der Richtung Q quer zur Erstreckungsrichtung E des Trennungsbereiches 15 nach dem Aufblasen. Letztere legt wiederum die Breite b des Trennungsbereiches 15 nach dem Aufblasen des Straffelementes 6 fest.

Je stärker die Zunahme der Breite b des Schlitzes 15 beim Aufblasen des Straffelementes 6 ist, desto stärker wird der vordere Befestigungsabschnitt 1 im Bereich seiner Unterkante gewölbt und desto stärker wird die Unterkante 103 des Airbags 100 in Längsrichtung L gestrafft.

Der Trennungsbereich (Schlitz 15) und das zugeordnete Straffelement 6 können prinzipiell an beliebiger Stelle des Airbags 100 angeordnet sein. Bevorzugt ist die Anordnung in einem der nicht aufblasbaren Abschnitte 1, 3, 5. Eine Anordnung in dem mittleren Abschnitt 3, der zwischen den beiden aufblasbaren Bereichen 2, 4 liegt, bietet dabei den Vorteil einer symmetrischen Lage des Trennungsbereiches zwischen dem vorderen und dem hinteren Ende des Airbags.

Darüber hinaus können natürlich für eine besonders starke Straffung auch mehrere Trennungsbereiche vorgesehen sein, also etwa Trennungsbereiche sowohl in dem vorderen als auch in dem hinteren Befestigungsabschnitt 1, 5 und auch in dem mittleren Abschnitt 3.

Das in den Figuren 1 und 2 dargestellte Straffelement 6 ist in der Draufsicht im wesentlichen rechteckförmig ausgebildet. Es ist eine Vielzahl weiterer Formen denkbar, mit denen sich die Funktion des Straffelementes erfüllen läßt. In den Figuren 3a bis 3c sind Beispielhaft einige weitere Formen eines geeigneten Straffelementes 6a, 6b bzw. 6c gezeigt, nämlich zwei ovale Formen und eine gekreuzte Form. Grundsätzlich kann für das Straffelement jede Form verwendet werden, die eine Überbrückung eines Trennungsbereiches in der Airbag-Anordnung ermöglicht, wobei das Straffelement durch Aufblasen straffbar und in seiner effektiven Länge quer zur Erstreckungsrichtung des Trennungsbereiches veränderbar sein muß.

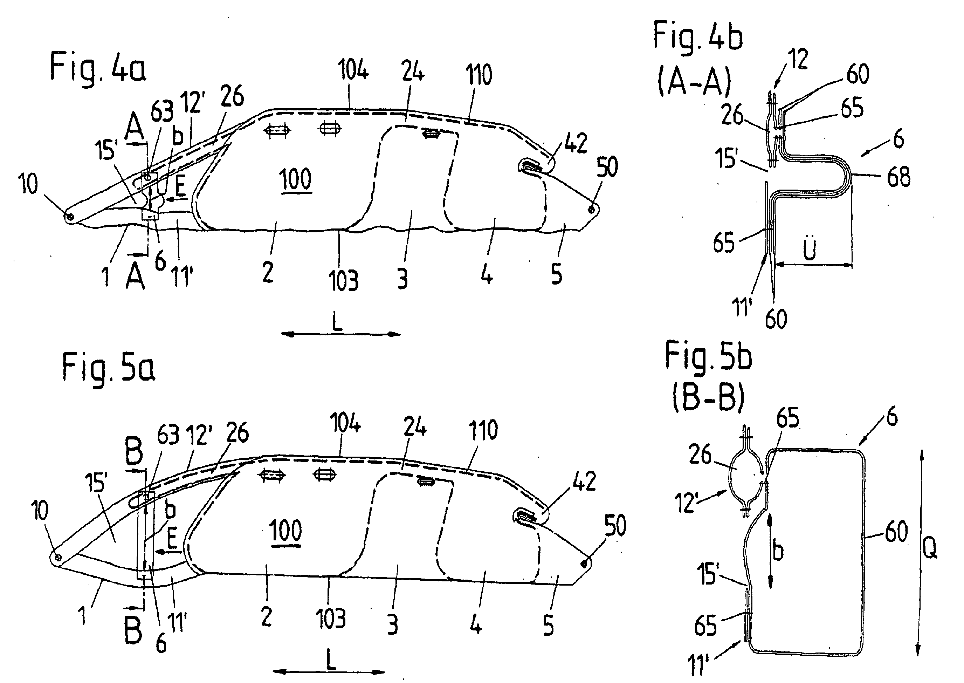

Ein weiteres in den Figuren 4a bis 5b dargestelltes Ausführungsbeispiel einer erfindungsgemäßen Airbag-Anordnung unterscheidet sich von dem in den Figuren 1a bis 2b dargestellten Ausführungsbeispiel in der Ausbildung der Trennungsbereiches sowie in der Anordnung der Gaszuleitung. Im übrigen sind die beiden Ausführungsbeispiele identisch. Dies wird durch die Verwendung übereinstimmender Bezugszeichen in den beiden Ausführungsbeispielen zum Ausdruck gebracht. Die nachfolgende Beschreibung der Figuren 4a bis 5b beschränkt sich auf diejenigen Teile der Airbag-Anordnung, die gegenüber dem ersten Ausführungsbeispiel abgewandelt sind. Im übrigen gilt die Beschreibung zu den Figuren 1a bis 2b entsprechend.

Gemäß den Figuren 4a bis 5b wird der Trennungsbereich 15' gebildet durch einen Freiraum bzw. Schlitz, der sich zwischen zwei separaten Teilen der Airbaganordnung erstreckt, nämlich zwischen zwei Bändern 11', 12', die der Befestigung der Airbaganordnung an der A-Säule eines Kraftfahrzeugs dienen und dementsprechend in einer Befestigungsstelle 10 zusammenlaufen. Dabei verläuft eines der Bänder als unteres Band 11' zwischen der Befestigungsstelle 10 und der unteren Kante 103 des Airbags und das andere als oberes Band 12' zwischen der Befestigungsstelle 10 und der oberen Kante 104 des Airbags. Die beiden Bänder 11', 12' sind jeweils mit dem Airbag 100 vernäht und bilden zwischen sich einen Freiraum bzw. Schlitz 15', der von einem Straffelement 6 überbrückt wird. Die Bänder 11', 12' bilden gemeinsam den vorderen Befestigungsabschnitt 1 der Airbag-Anordnung.

Der zweite Unterschied zu dem vorhergehenden Ausführungsbeispiel liegt darin, daß vorliegend die Gaszuleitung 26 entlang des oberen Teilabschnittes des Befestigungsabschnittes 1 (oberes Band 12') zu dem Straffelement 6 verläuft. Der Gaszuleitung 26 kann daher unmittelbar das Gas aus einer Gaslanze zugeführt werden, die sich entlang der Oberkante 104 des Airbags 100 erstreckt und die im eingebauten Zustand im Dachkantenbereich des entsprechenden Fahrzeugs angeordnet ist.

In seiner Funktion entspricht das vorliegende Ausführungsbeispiel der vorhergehend ausführlich beschriebenen Airbag-Anordnung. Bei einem Aufblasen des Airbags 100 wird gleichzeitig auch das Straffelement 6 (mittels der durch die Gaszuleitung 26 strömenden Gase) aufgeblasen, was zu einer Verbreiterung des Freiraumes bzw. Schlitzes 15' zwischen den beiden Bändern 11', 12' führt. Dabei werden diese Bänder 11', 12' gewölbt, was zu einer Verkürzung von deren effektiver Länge entlang der Fahrzeuglängsrichtung L führt und somit eine Straffung insbesondere der Unterkante 103 des Airbags zur Folge hat.

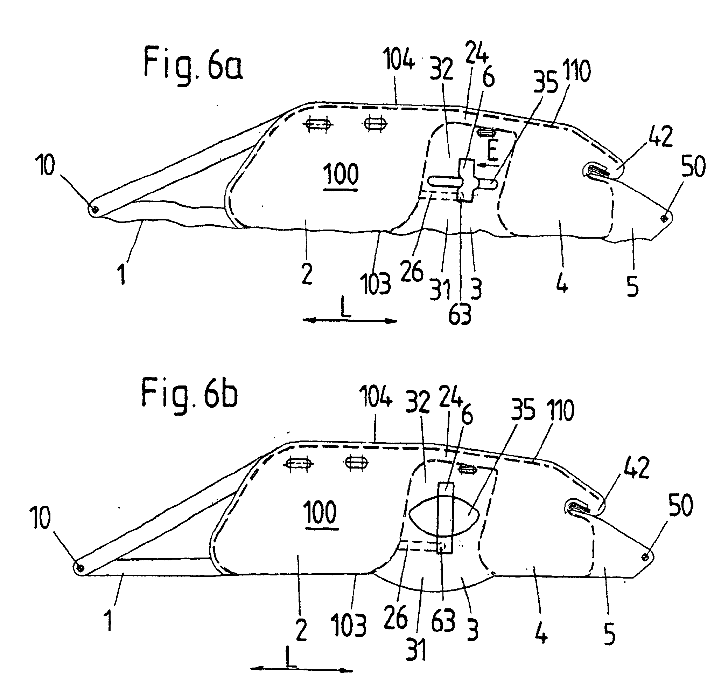

In den Figuren 6a und 6b ist ein Ausführungsbeispiel einer Airbag-Anordnung dargestellt, bei der sich ein Trennungsbereich in Form eines Schlitzes 35 und ein zugeordnetes Straffelement 6 in einem mittleren Abschnitt 3 des Airbags 100 befinden, der die beiden aufblasbaren Abschnitte 2, 4 miteinander verbindet.

Der nicht aufblasbare mittlere Abschnitt 3 des Airbags 100 wird durch den Schlitz 35 in entsprechender Weise in zwei Teilabschnitte 31, 32 getrennt wie der vordere Befestigungsabschnitt 1 der Airbaganordnung bei dem in den Figuren 1a bis 2b gezeigten Ausführungsbeispiel. Demgemäß kommt es beim Aufblasen der in Figur 6a dargestellten Airbaganordnung zu einer Wölbung des unteren Teilabschnittes 31, durch die die effektive Länge der Unterkante 103 verkürzt und somit der Airbag 100 im Bereich seiner Unterkante 103 gestrafft wird.

Bei den vorstehend beschriebenen Ausführungsbeispielen kann anstelle eines Trennungsbereiches in Form eines Schlitzes bzw. Freiraumes jeweils auch ein anderer der eingangs erwähnten Trennungsbereiche, z.B. eine Perforation, verwendet werden.

Durch das Aufblasen eines Straffelementes kann neben einer Straffung der Unterkante der Airbag-Anordnung auch ein gleichmäßigeres Entfalten der Airbag-Anordnung in einem Crash-Fall erreicht werden.

Probleme in dieser Hinsicht können z.B. durch eine abweichende Geometrie des Stauraumes für den gefalteten Airbag (im Dachkantenbereich eines Fahrzeugs) bezogen auf die natürliche Form des gefalteten Airbags auftreten. Wird in einem Crash-Fall das zum Aufblasen des Airbags vorgesehen Gas (wie in den Figuren 1a bis 6b dargestellt) von oben her in die Airbag-Anordnung eingelassen, so werden zunächst deren obere Abschnitte aufgeblasen. Dies kann bei einer nicht exakt an die Geometrie des Stauraumes angepaßten Form des gefalteten Airbags (die ja auch noch anderen Randbedingungen als der Anpassung an die Geometrie des Stauraumes unterliegt) dazu führen, daß die unteren Abschnitte der Airbag-Anordnung aus ihrer ursprünglichen Position heraus zur Seite weggedrückt werden und sich mit zusätzlicher verzögerung gegenüber den oberen Abschnitten entfalten.

Dieses Problem wird vorliegend behoben, da die unteren Abschnitte der Airbag-Anordnung beim Aufblasen des in den Figuren 1a bis 6b vorgesehenen Straffelementes frühzeitig so positioniert werden, daß sie sich entlang der vertikalen Fahrzeugachse (quer zur Fahrzeuglängsrichtung) aus dem Stauraum im Dachkantenbereich heraus vor den Seitenscheiben des entsprechenden Kraftfahrzeuges entfalten.

## Patentansprüche

1. Airbag-Anordnung für ein Kraftfahrzeug mit mindestens einem aufblasbaren Bereich, der mittels eines Gasgenerators aufblasbar ist, wobei
a) die Airbag-Anordnung im aufgeblasenen Zustand einen seitlichen Vorhang zum Schutz eines Fahrzeuginsassen bildet und zwischen zwei in Fahrzeuglängsrichtung voneinander beabstandeten Punkten (10, 50) der Fahrzeugkarosserie eingespannt ist und
b) die Airbag-Anordnung in mindestens einem Abschnitt (1, 3) einen Trennungsbereich (15, 15', 35) aufweist, der von einem Straffelement (6) überbrückt wird, das beidseits des Trennungsbereiches (15, 15', 35) jeweils an der Airbag-Anordnung befestigt ist und das gemeinsam mit dem aufblasbaren Bereich (2, 4) aufblasbar ist, wodurch sich der Abschnitt (1, 3) verformt und die effektive Länge des Abschnittes (1, 3) in Fahrzeuglängsrichtung (L) verkürzt wird,
**dadurch gekennzeichnet,**
**daß** das unaufgeblasene Straffelement (6) zwischen den Befestigungsstellen (65) beidseits des Trennungsbereiches (15, 15', 35), quer zur Fahrzeuglängsrichtung (L) betrachtet, eine Länge aufweist, die größer ist als der Abstand der Befestigungsstellen (65) der ausgebreiteten, unaufgeblasenen Airbag-Anordnung und daß beim Aufblasen des Straffelementes (6) der Abstand seiner Befestigungsstellen (65) beidseits des Trennungsbereiches (15, 15' , 35) größer wird, so dass die Ausdehnung (b) des Trennungsbereiches (15, 15', 35) quer zur Fahrzeuglängsrichtung (L) zunimmt.

2. Airbag-Anordnung nach Anspruch 1, **dadurch gekennzeichnet, daß** die Erstreckungsrichtung (E) des Trennungsbereiches (15, 15', 35) zumindest eine Komponente in Fahrzeuglängsrichtung (L) aufweist.

3. Airbag-Anordnung nach Anspruch 2, **dadurch gekennzeichnet, daß** sich der Trennungsbereich (15, 15', 35) im wesentlichen in Fahrzeuglängsrichtung (L) erstreckt.

4. Airbag-Anordnung nach einem der vorhergehenden Ansprüche, **dadurch gekennzeichnet, daß** das Straffelement (6) den Trennungsbereich (15, 15', 35) quer zu dessen Erstreckungsrichtung (E) überbrückt.

5. Airbag-Anordnung nach einem der vorhergehenden Ansprüche, **dadurch gekennzeichnet, daß** das Straffelement (6) als separates Element an einem Abschnitt (1, 3) der Airbag-Anordnung befestigt ist.

6. Airbag-Anordnung nach einem der vorhergehenden Ansprüche, **dadurch gekennzeichnet, daß** das Straffelement (6) im unaufgeblasenen Zustand lose über dem Trennungsbereich (15, 15', 35) liegt und beim Aufblasen gestrafft wird, wodurch die Breite (b) des Trennungsbereiches (15, 15', 35) zunimmt.

7. Airbag-Anordnung nach einem der vorhergehenden Ansprüche, **dadurch gekennzeichnet, daß** das Straffelement (6) beidseits des Trennungsbereiches (15, 15', 35) an dem mit dem Trennungsbereich versehenen Abschnitt (1, 3) befestigt ist.

8. Airbag-Anordnung nach einem der vorhergehenden Ansprüche, **dadurch gekennzeichnet, daß** das Straffelement (6) mit dem mit dem Trennungsbereich (15, 15', 35) versehenen Abschnitt (1, 3) vernäht ist.

9. Airbag-Anordnung nach einem der vorhergehenden Ansprüche, **dadurch gekennzeichnet, daß** der Trennungsbereich (15, 15', 35) in einem nicht aufblasbaren Abschnitt (1, 3, 5) der Airbag-Anordnung vorgesehen ist.

10. Airbag-Anordnung nach einem der vorhergehenden Ansprüche, **dadurch gekennzeichnet, daß** der Trennungsbereich (15, 15') in einem Befestigungsabschnitt (1, 5) vorgesehen ist, über den die Airbag-Anordnung mit einem Teil der Fahrzeugkarosserie verbindbar ist.

11. Airbag-Anordnung nach einem der vorhergehenden Ansprüche, **dadurch gekennzeichnet, daß** der Trennungsbereich (35) in einem Abschnitt (3) vorgesehen ist, der sich zwischen zwei aufblasbaren Bereichen (2, 4) der Airbag-Anordnung erstreckt.

12. Airbag-Anordnung nach einem der vorhergehenden Ansprüche, **dadurch gekennzeichnet, daß** sich der Trennungsbereich (15') zwischen zwei separaten Teilen (11', 12') der Airbag-Anordnung, insbesondere zwischen zwei der Verbindung mit der Fahrzeugkarosserie dienenden Bändern, erstreckt.

13. Airbag-Anordnung nach einem der vorhergehenden Ansprüche, **dadurch gekennzeichnet, daß** der Trennungsbereich (15, 15', 35) den mit dem Trennungsbereich versehenen Abschnitt (1, 3) der Airbag-Anordnung quer zu der Erstreckungsebene dieses Abschnittes (1, 3) vollständig durchtrennt.

14. Airbag-Anordnung nach einem der vorhergehenden Ansprüche, **dadurch gekennzeichnet, daß** der Trennungsbereich (15, 15', 35) durch einen Freiraum, z.B. in Form eines Schlitzes oder eines Spaltes, gebildet wird.

15. Airbag-Anordnung nach einem der Ansprüche 1 bis 13, **dadurch gekennzeichnet, daß** der Trennungsbereich durch einen nicht aufblasbaren Bereich der Airbag-Anordnung gebildet wird.

16. Airbag-Anordnung nach Anspruch 15, **dadurch gekennzeichnet, daß** der Trennungsbereich durch eine Perforation gebildet wird.

17. Airbag-Anordnung nach Anspruch 15, **dadurch gekennzeichnet, daß** der Trennungsbereich durch einen im ausgebreiteten Zustand der Airbag-Anordnung mindestens eine Falte aufweisenden Bereich gebildet wird.

18. Airbag-Anordnung nach einem der vorhergehenden Ansprüche, **dadurch gekennzeichnet, daß** das Straffelement (6) mit demselben Gasgenerator aufblasbar ist wie mindestens ein aufblasbarer Bereich (2) der Airbag-Anordnung.

19. Airbag-Anordnung nach Anspruch 18, **dadurch gekennzeichnet, daß** eine direkte Verbindung zwischen dem Gasgenerator und dem Straffelement (6) vorgesehen ist oder daß dem Straffelement (6) Gas aus einem aufblasbaren Bereich (2) der Airbag-Anordnung zuführbar ist.

20. Airbag-Anordnung nach einem der vorhergehenden Ansprüche, **dadurch gekennzeichnet, daß** das Straffelement (6) aus gasundurchlässigem Material besteht.

21. Airbag-Anordnung nach einem der vorhergehenden Ansprüche, **dadurch gekennzeichnet, daß** Mittel vorgesehen sind, die das Austreten von Gas aus dem aufgeblasenen Straffelement (6) verhindern.

22. Airbag-Anordnung nach Anspruch 21, **dadurch gekennzeichnet, daß** im Bereich der Gaseinlaßöffnung (63) des Straffelementes (6) eine Membran angeordnet ist, die ein Ausströmen des Gases aus dem Straffelement (6) durch die Gaseinlaßöffnung (63) des Straffelementes (6) verhindert.

23. Airbag-Anordnung nach einem der vorhergehenden Ansprüche, **dadurch gekennzeichnet, daß** die Airbag-Anordnung zur Erstreckung entlang des seitlichen Dachkantenbereiches eines Kraftfahrzeugs ausgebildet ist.

## Claims

1. Airbag arrangement for a motor vehicle, with at least one inflatable region which is capable of being inflated by means of a gas generator,
a) in the inflated state the airbag arrangement forming a lateral curtain for protecting a vehicle occupant and being clamped between two points (10, 50) on the vehicle body which are at a distance from one another in the longitudinal direction of the vehicle, and
b) the airbag arrangement having, in at least one portion (1, 3), a separation region (15, 15', 35) bridged by a tautening element (6) which is fastened to the airbag arrangement on each of the two sides of the separation region (15, 15', 35) and which is capable of being inflated together with the inflatable region (2, 4), with the result that the portion (1, 3) is deformed and the effective length of the portion (1, 3) in the longitudinal direction (L) of the vehicle is reduced,
**characterized in that**
the uninflated tautening element (6) has, between the fastening points (65) on both sides of the separation region (15, 15', 35), transversely with respect to the longitudinal direction (L) of the vehicle a length which is greater than the distance between the fastening points (65) of the spread-out uninflated airbag arrangement, and **in that**, during the inflation of the tautening element (6), the distance between its fastening points (65) on both sides of the separation region (15, 15', 35) becomes larger so that the extent (b) of the separation region (15, 15', 35) increases transversely with respect to the longitudinal direction (L) of the vehicle.

2. Airbag arrangement according to Claim 1, **characterized in that** the direction of extent (E) of the separation region (15, 15', 35) has at least one component in the longitudinal direction (L) of the vehicle.

3. Airbag arrangement according to Claim 2, **characterized in that** the separation region (15, 15', 35) extends essentially in the longitudinal direction (L) of the vehicle.

4. Airbag arrangement according to one of the preceding claims, **characterized in that** the tautening element (6) bridges the separation region (15, 15', 35) transversely to the direction of extent (E) of the latter.

5. Airbag arrangement according to one of the preceding claims, **characterized in that** the tautening element (6) is fastened as a separate element to one portion (1, 3) of the airbag arrangement.

6. Airbag arrangement according to one of the preceding claims, **characterized in that** the tautening element (6) lies loosely over the separation region (15, 15', 35) in the uninflated state and is tautened during inflation, with the result that the width (b) of the separation region (15, 15', 35) increases.

7. Airbag arrangement according to one of the preceding claims, **characterized in that** the tautening element (6) is fastened on both sides of the separation region (15, 15', 35) to the portion (1, 3) provided with the separation region.

8. Airbag arrangement according to one of the preceding claims, **characterized in that** the tautening element (6) is stitched to the portion (1, 3) provided with the separation region (15, 15', 35).

9. Airbag arrangement according to one of the preceding claims, **characterized in that** the separation region (15, 15', 35) is provided in a non-inflatable portion (1, 3, 5) of the airbag arrangement.

10. Airbag arrangement according to one of the preceding claims, **characterized in that** the separation region (15, 15') is provided in a fastening portion (1, 5), via which the airbag arrangement is capable of being connected to part of the vehicle body.

11. Airbag arrangement according to one of the preceding claims, **characterized in that** the separation region (35) is provided in a portion (3) which extends between two inflatable regions (2, 4) of the airbag arrangement.

12. Airbag arrangement according to one of the preceding claims, **characterized in that** the separation region (15') extends between two separate parts (11', 12') of the airbag arrangement, in particular between two bands serving for connection to the vehicle body.

13. Airbag arrangement according to one of the preceding claims, **characterized in that** the separation region (15, 15', 35) completely intersects that portion (1, 3) of the airbag arrangement which is provided with the separation region, transversely to the plane of extent of this portion (1, 3).

14. Airbag arrangement according to one of the preceding claims, **characterized in that** the separation region (15, 15', 35) is formed by a free space, for example in the form of a slit or a gap.

15. Airbag arrangement according to one of Claims 1 to 13, **characterized in that** the separation region is formed by a non-inflatable region of the airbag arrangement.

16. Airbag arrangement according to Claim 15, **characterized in that** the separation region is formed by a perforation.

17. Airbag arrangement according to Claim 15, **characterized in that** the separation region is formed by a region having at least one fold when the airbag arrangement is in the spread-out state.

18. Airbag arrangement according to one of the preceding claims, **characterized in that** the tautening element (6) is capable of being inflated by means of the same gas generator as at least one inflatable region (2) of the airbag arrangement.

19. Airbag arrangement according to claim 18, **characterized in that** a direct connection between the gas generator and the tautening element (6) is provided, or **in that** gas is capable of being fed to the tautening element (6) from an inflatable region (2) of the airbag arrangement.

20. Airbag arrangement according to one of the preceding claims, **characterized in that** the tautening element (6) consists of gas-impermeable material.

21. Airbag arrangement according to one of the preceding claims, **characterized in that** means are provided which prevent gas from escaping from the inflated tautening element (6).

22. Airbag arrangement according to Claim 21, **characterized in that** a diaphragm is arranged in the region of the gas inlet orifice (63) of the tautening element (6) which prevents the gas from flowing out of the tautening element (6) through the gas inlet orifice (63) of the tautening element (6).

23. Airbag arrangement according to one of the preceding claims, **characterized in that** the airbag arrangement is designed to extend along the lateral roof edge region of a motor vehicle.

## Revendications

1. Agencement de coussin gonflable pour un véhicule automobile, comportant au moins une région gonflable qui peut être gonflée au moyen d'un générateur de gaz, dans lequel
a) l'agencement de coussin gonflable forme, à l'état gonflé, un rideau latéral pour protéger un passager du véhicule et est tendu entre deux points (10, 50) de la carrosserie du véhicule espacés l'un de l'autre selon une direction longitudinale du véhicule, et
b) l'agencement de coussin gonflable présente dans au moins un tronçon (1, 3) une région de séparation (15, 15', 35) qui est pontée par un élément de raidissement (6) qui est fixé sur l'agencement de coussin gonflable des deux côtés de la région de séparation (15, 15', 35) et qui peut être gonflé conjointement avec la région gonflable (2, 4), à la suite de quoi le tronçon (1, 3) se déforme et la longueur effective du tronçon (1, 3) est raccourcie dans la direction longitudinale (L) du véhicule,
**caractérisé en ce que**
l'élément de raidissement (6) non gonflé entre les points de fixation (65) des deux côtés de la région de séparation (15, 15', 35), vu transversalement à la direction longitudinale (L) du véhicule, présente une longueur qui est plus grande que la distance entre les points de fixation (65) de l'agencement de coussin gonflable déployé et non gonflé, et **en ce que** lors du gonflage de l'élément de raidissement (6), la distance entre ses points de fixation (65) des deux côtés de la région de séparation (15, 15', 35) devient plus grande, de sorte que l'extension (b) de la région de séparation (15, 15', 35) augmente transversalement à la direction longitudinale (L) du véhicule.

2. Agencement de coussin gonflable selon la revendication 1, **caractérisé en ce que** la direction d'extension (E) de la région de séparation (15, 15', 35) présente au moins une composante dans la direction longitudinale (L) du véhicule.

3. Agencement de coussin gonflable selon la revendication 2, **caractérisé en ce que** la région de séparation (15, 15', 35) s'étend sensiblement selon la direction longitudinale (L) du véhicule.

4. Agencement de coussin gonflable selon l'une des revendications précédentes, **caractérisé en ce que** l'élément de raidissement (6) ponte la région de séparation (15,15', 35) transversalement à la direction d'extension (E) de celle-ci.

5. Agencement de coussin gonflable selon l'une des revendications précédentes, **caractérisé en ce que** l'élément de raidissement (6) est fixé en tant qu'élément séparé sur un tronçon (1, 3) de l'agencement de coussin gonflable.

6. Agencement de coussin gonflable selon l'une des revendications précédentes, **caractérisé en ce qu'**à l'état non gonflé, l'élément de raidissement (6) repose de manière lâche au-dessus de la région de séparation (15, 15', 35) et est raidi lors du gonflage, à la suite de quoi la largeur (b) de la région de séparation (15, 15', 35) augmente.

7. Agencement de coussin gonflable selon l'une des revendications précédentes, **caractérisé en ce que** l'élément de raidissement (6) est fixé des deux côtés de la région de séparation (15, 15', 35) sur le tronçon (1, 3) pourvu de la région de séparation.

8. Agencement de coussin gonflable selon l'une des revendications précédentes, **caractérisé en ce que** l'élément de raidissement (6) est cousu avec le tronçon (1, 3) pourvu de la région de séparation (15, 15', 35).

9. Agencement de coussin gonflable selon l'une des revendications précédentes, **caractérisé en ce que** la région de séparation (15, 15', 35) est prévue dans un tronçon (1, 3, 5) non gonflable de l'agencement de coussin gonflable.

10. Agencement de coussin gonflable selon l'une des revendications précédentes, **caractérisé en ce que** la région de séparation (15, 15') est prévue dans un tronçon de fixation (1, 5) via lequel l'agencement de coussin gonflable peut être relié à une partie de la carrosserie de véhicule.

11. Agencement de coussin gonflable selon l'une des revendications précédentes, **caractérisé en ce que** la région de séparation (35) est prévue dans un tronçon (3) qui s'étend entre deux régions (2, 4) gonflables de l'agencement de coussin gonflable.

12. Agencement de coussin gonflable selon l'une des revendications précédentes, **caractérisé en ce que** la région de séparation (15') s'étend entre deux parties séparées (11', 12') de l'agencement de coussin gonflable, en particulier entre deux bandes servant à la liaison avec la carrosserie du véhicule.

13. Agencement de coussin gonflable selon l'une des revendications précédentes, **caractérisé en ce que** la région de séparation (15, 15', 35) sépare totalement le tronçon (1, 3) de l'agencement de coussin gonflable, qui est pourvu de la région de séparation, transversalement au plan d'extension de ce tronçon (1, 3).

14. Agencement de coussin gonflable selon l'une des revendications précédentes, **caractérisé en ce que** la région de séparation (15, 15', 35) est formée par un espace libre, par exemple sous forme d'un intervalle ou d'une fente.

15. Agencement de coussin gonflable selon l'une des revendications 1 à 13, **caractérisé en ce que** la région de séparation est formée par une région non gonflable de l'agencement de coussin gonflable.

16. Agencement de coussin gonflable selon la revendication 15, **caractérisé en ce que** la région de séparation est formée par une perforation.

17. Agencement de coussin gonflable selon la revendication 15, **caractérisé en ce que** la région de séparation est formée par une région présentant au moins un pli à l'état déployé de l'agencement de coussin gonflable.

18. Agencement de coussin gonflable selon l'une des revendications précédentes, **caractérisé en ce que** l'élément de raidissement (6) est gonflable avec le même générateur de gaz qu'au moins une région gonflable (2) de l'agencement de coussin gonflable.

19. Agencement de coussin gonflable selon la revendication 18, **caractérisé en ce qu'**il est prévu une liaison directe entre le générateur de gaz et l'élément de raidissement (6), ou **en ce qu'**on peut amener à l'élément de raidissement (6) du gaz provenant d'une région gonflable (2) de l'agencement de coussin gonflable.

20. Agencement de coussin gonflable selon l'une des revendications précédentes, **caractérisé en ce que** l'élément de raidissement (6) est en matériau imperméable aux gaz.

21. Agencement de coussin gonflable selon l'une des revendications précédentes, **caractérisé en ce qu'**il est prévu des moyens qui empêchent la sortie de gaz hors de l'élément de raidissement (6) gonflé.

22. Agencement de coussin gonflable selon la revendication 21, **caractérisé en ce que** dans la région de l'orifice d'entrée de gaz (63) de l'élément de raidissement (6) est agencée une membrane qui empêche l'écoulement de gaz hors de l'élément de raidissement (6) à travers l'orifice d'entrée de gaz (63) de l'élément de raidissement (6).

23. Agencement de coussin gonflable selon l'une des revendications précédentes, **caractérisé en ce que** l'agencement de coussin gonflable est réalisé pour s'étendre le long de la région de l'arête de toit latérale d'un véhicule automobile.
